# EUROPEAN PATENT SPECIFICATION

(11) **EP 1 746 603 B1**
(45) Date of publication and mention of the grant of the patent: **25.12.2013**
(21) Application number: 06253173.6
(22) Date of filing: 20.06.2006
(51) Int. Cl.: G06F 1/32, G11B 5/012, G11B 19/02

(54) **System partitioning for hard disk drive electronics**
Partitionierung der Elektronik-Baugruppen von Festplatten
Partitionnement des systèmes électroniques pour disque dur

(30) Priority: 22.07.2005 US 187293
(43) Date of publication of application: 24.01.2007
(73) Proprietor: STMicroelectronics, Inc., Coppell, TX 75019 (US)
(72) Inventor: Brianti, Francesco, San Jose, CA 95125 (US); Bertino, Gian Luca, Roma 00149 (IT)
(74) Representative: Style, Kelda Camilla Karen

(56) References cited:
- WO-A2-2004/061604
- US-A- 5 710 675
- US-A- 5 760 563
- US-A- 6 118 602
- US-A1- 2001 009 483
- US-A1- 2002 071 199
- US-A1- 2003 206 358
- US-A1- 2004 131 343
- US-B1- 6 181 501
- US-B1- 6 249 824
- US-B1- 6 643 084

## Description

### BACKGROUND OF THE INVENTION

The present invention relates to Hard Disk Drives ("HDD") and more particularly, to a novel partitioning of the analog and digital functions that are used in hard disk drive integrated chip sets and associated circuit boards.

Hard disk drives typically include at least three integrated circuits. The essential analog and digital functions comprising the hard disk drive are distributed amongst the three integrated circuits. One of the integrated circuits is usually an analog integrated circuit including a preamplifier. Another of the integrated circuits is also analog and includes a motor controller. At least one of the integrated circuits in a typical hard disk drive chip set is usually a "mixed signal", "system on a chip" integrated circuit that includes both a plurality of both digital and analog functions, such as read channels and a hard disk controller.

The problem with the mixed signal integrated circuit is that this leads to an inefficient use of process technology. Although it is certainly possible to integrate digital and analog functions on the same chip with the same process technology, these process technologies are more expensive and problematic that other process technologies that are suited only for analog circuits (BiCMOS) or digital circuits (CMOS). Further, the use of one or more mixed signal integrated circuits in the chip set can add to the component count and to the cost of the overall system.

US 2001/0009483 discloses a signal processing circuit for a magnetic recording apparatus wherein a coefficient compensation circuit is formed by defining a constitution of the equalizer circuit, and error detection circuit is provided which operates by receiving input from the detection circuit, and the LSI is formed by a plurality of analog and digital chips. This prior art is reflected by the preamble of claims 1 and 8.

US 6118602 discloses a multi-head disk drive of a data storage system having a preamplifier that is split into a mother chip and set of daughter chips, each daughter chip corresponding to a head in the disk drive. The daughter chips contain little circuitry and can be made smaller and lighter than conventional preamplifiers.

In general, the challenge for a desirable hard disk drive chip set is how to achieve high speed and low dynamic and static power dissipation to enable "system on a chip" integration and how to minimize the number of integrated circuits and hard disk drive printed circuit boards for resource optimization and to further reduce power dissipation.

What is desired, therefore, is a more efficient partitioning of the analog and digital functions in a hard disk drive chip set.

### SUMMARY OF THE INVENTION

According to an embodiment of the present invention, there is provided a hard disk drive chip set comprising a first chip including all of the analog functions for the hard disk drive except for a motor controller, and characterized by a second chip including all of the digital functions for the hard disk drive including an analog-to-digital converter an output of which is coupled to a plurality of read channels. The analog chip is implemented in a BiCMOS process and includes read path amplification including a variable gain amplifier, reference and bias circuitry, thermal asperity control and magneto resistivity asymmetry compensation circuitry, as well as other analog functions. The digital chip is implemented in a CMOS process and includes an analog-to-digital converter, a servo processor circuit, and a hard disk controller. Each of the read channels in the digital chip include an FIR filter, an ITR circuit, and a Viterbi detector.

According to another embodiment of the present invention, there is provided a hard disk drive comprising a first chip including substantially all of the analog functions for the hard disk drive except for a motor controller on a first circuit board, and the characterized by a second chip substantially including all of the digital functions for the hard disk drive including an analog-to-digital converter an output of which is coupled to a plurality of read channels, an external memory, and a motor controller on a second circuit board. The first circuit board can be a flexible circuit board, if desired. The second circuit board can be a printed circuit board physically coupled to a hard drive.

The analog chip and the digital chip are coupled to each other with a multi-wire connector. The digital chip is coupled to a hard drive with a ribbon cable. The analog chip is coupled to a head of a hard drive.

According to another embodiment, there is provided a hard disk drive chip set comprising a first chip including substantially all of the analog functions for the hard disk drive including analog motor controller functions; and a second chip including substantially all of the digital functions for the hard disk drive including an analog-to-digital converter an output of which is coupled to a plurality of selectable read channels and including digital motor controller functions.

### BRIEF DESCRIPTION OF THE DRAWINGS

The aforementioned and other features and objects of the present invention and the manner of attaining them will become more apparent and the invention itself will be best understood by reference to the following description of a preferred embodiment taken in conjunction with the accompanying drawings, wherein:
Figure 1 is a block diagram of a portioning of the analog and digital functions for a hard disk drive chip set;
Figure 2 is a more detailed block diagram of the analog and digital functions for a hard disk drive chip set showing an analog "front end" integrated circuit and a digital "back end" integrated circuit;
Figure 3 is an expanded view of the analog front end integrated circuit showing some further detail regarding the pinout of the integrated circuit;
Figure 4 is a block diagram of the entire hard disk drive chip set showing the locations of the analog and digital integrated circuits on two separate circuit boards in an embodiment in which the motor controller is provided in a separate chip; and
Figure 5 is a block diagram of the entire hard disk drive chip set showing the locations of the analog and digital integrated circuits on two separate circuit boards in an embodiment in which the analog and digital motor controller functions are divided and incorporated into the existing analog and digital chips.

### DETAILED DESCRIPTION OF THE INVENTION

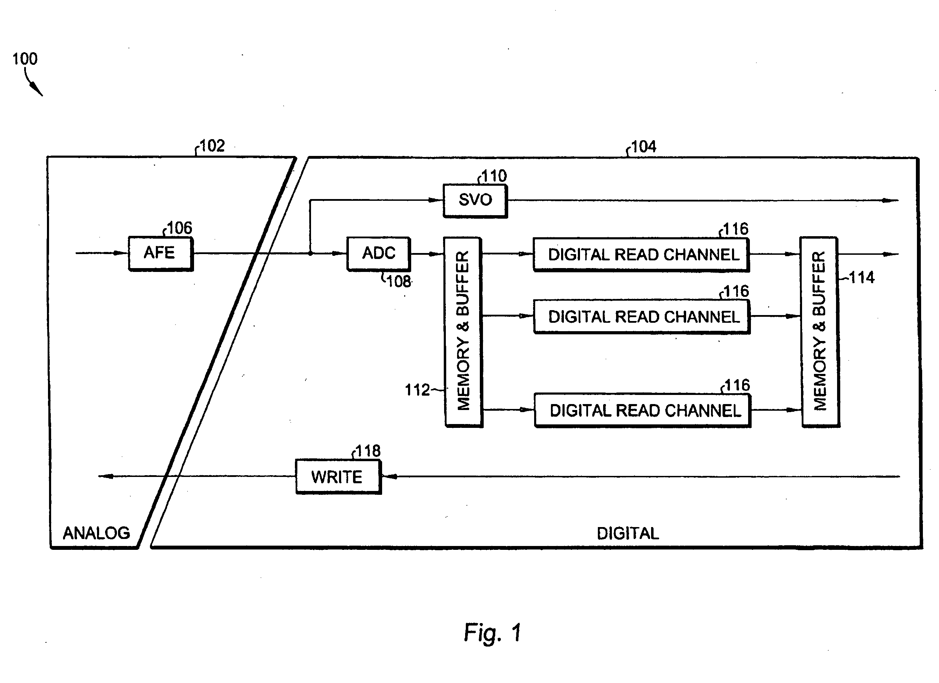

Referring now to FIG. 1 a block diagram 100 shows a partitioning of the analog and digital functions for a hard disk drive chip set. An analog chip 102 includes an analog "front end" 106 that includes all of the analog functions of a hard disk drive except for a motor controller. The analog front end 106 is described in further detail below. A digital chip 104 includes an analog-to-digital converter 108, a servo function block 110, memory and buffer blocks 112, a plurality of digital read channels 116, and a digital write channel 118, as well as other digital circuits and functions, which are also described in further detail below.

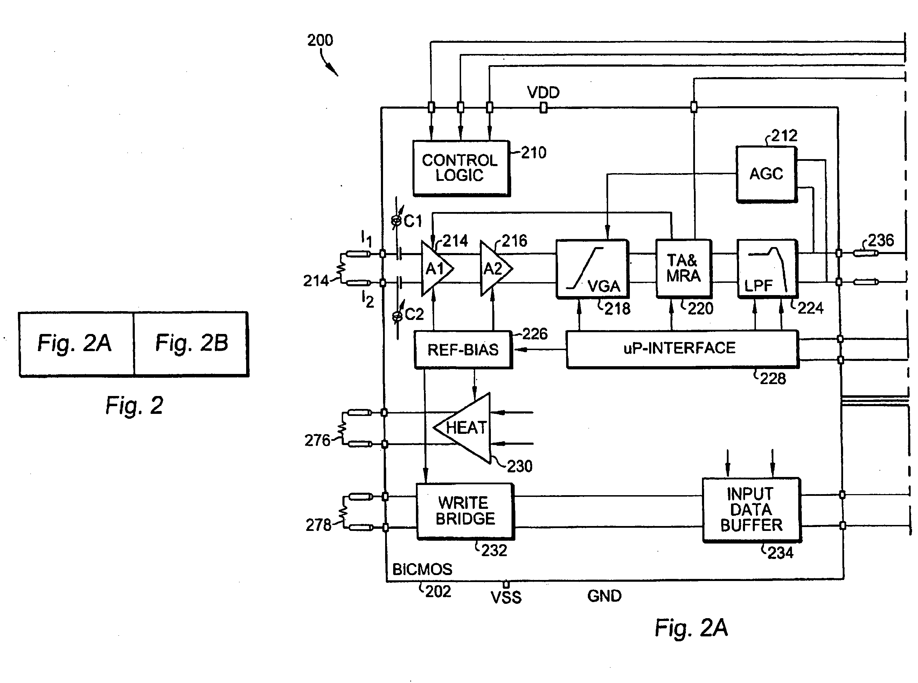

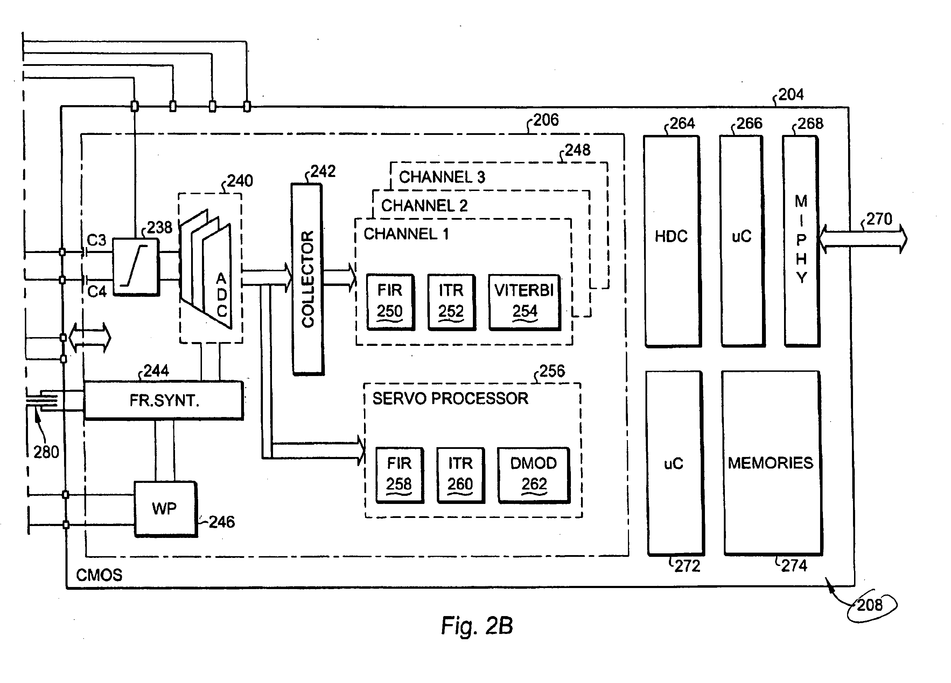

Referring now to FIG. 2 a more detailed block diagram 200 of the analog and digital functions for the hard disk drive chip set shows the analog "front end" integrated circuit 202 and the digital "back end" integrated circuit 204.

Analog chip 202 includes analog control logic 210, which is a plurality of registers for setting gain and cutoff frequencies in the preamplifiers 214 and 216, and other control functions. The control logic block 210 can be designed using bipolar, CMOS, or BiCMOS logic. Variable current sources I1 and I2 are coupled to the read head terminals for biasing. The read head 214 is capacitively coupled to the analog chip 202 through capacitors C1 and C2. A preamplification chain 214, 216 includes amplifiers A1 and A2, as well as variable gain amplifier 218. The output of the variable gain amplifier 218 is coupled to block 220, which includes the thermal asperity control and magneto resistivity asymmetry control functions for compensating for thermal variations and variations in the magnetic element of the hard disk. The output of block 220 is coupled to a low pass filter 224, which can be implemented using bipolar, CMOS, or BiCMOS design techniques. An automatic gain control block 212 is coupled to the variable gain amplifier 218, as well as to the outputs of the low pass filter 224. The automatic gain control block 212 is used to adjust the amplitude of the input signal of a given target and can be implemented using bipolar, CMOS, or BiCMOS design techniques. A reference/bias block 226 provides reference voltages and bias currents for amplifiers A1 and A2, as well as the heater element 230 and write bridge 232, which are described in further detail below. A microprocessor interface block 228 receives digital signals from the digital chip and converts these signals into analog voltages and currents for controlling the reference/bias block 226, the variable gain amplifier 218, block 220, and the low pass filter 224. The microprocessor interface block 228 can be implemented using bipolar, CMOS, or BiCMOS design techniques. An optional heater 230 can be coupled to the write head 276. The input of the heater 230 is coupled to a current generator (not shown in FIG. 2. The optional heater 276 is used to adjust head resistance. A "write bridge" 232 is also coupled to the write head at 278 and is used to write onto the disk. The input of the write bridge 232 is controlled by input data buffer 234, which receives digital inputs from the digital chip 204.

Digital chip 204 includes capacitors C3 and C4 for capacitively coupling the output of the low pass filter 224 from the analog chip 202 through transmission lines 236. A buffer 238 supplies the signal to a plurality of analog-to-digital converters 240. A frequency synthesizer 244 receives a signal from the off-chip crystal 280, and provides a clock signal to the analog-to-digital converters 240 and to the write pre-compensation block 246. The write pre-compensation block is used to adjust a transition spacing signal before it is written to the disk. The output of the analog-to-digital converter block 240 is coupled to a collector (memory) 242, which is in turn coupled to a plurality of read channels 248. While only three channels are shown, any number may be used. Each of the channels is selectable so that the final chip set can be customized to work in a wide range of different applications, substantially reducing the number of dedicated chip sets that would otherwise have to be created. Each read channel 248 includes a Finite Input Response filter ("FIR") 250, an Interpolating Timing Recovery ("ITR") block 252, and a Viterbi algorithm block 254. The output of the analog-to-digital converter block 240 is also directly coupled to a servo processor block which also includes an FIR filter 258, ITR block 260, as well as a demodulator block ("DMOD") 262.

Further digital processing is provided in digital chip 204 by a hard disk controller ("HDC") 264, a microcontroller ("µC") 266, and an interface block 268 ("Multi-Interface PHYsical"). Interface block 268 communicates with the user via digital bus 270. Still further digital processing is provided by microcontroller 272, as well as memory block 274. The first microcontroller 266 and second microcontroller 272 are used to control all of the digital functions on the chip including retrieval of data and interfacing. While two microcontrollers are shown, any number can be used and the digital functions distributed between the microcontrollers as desired.

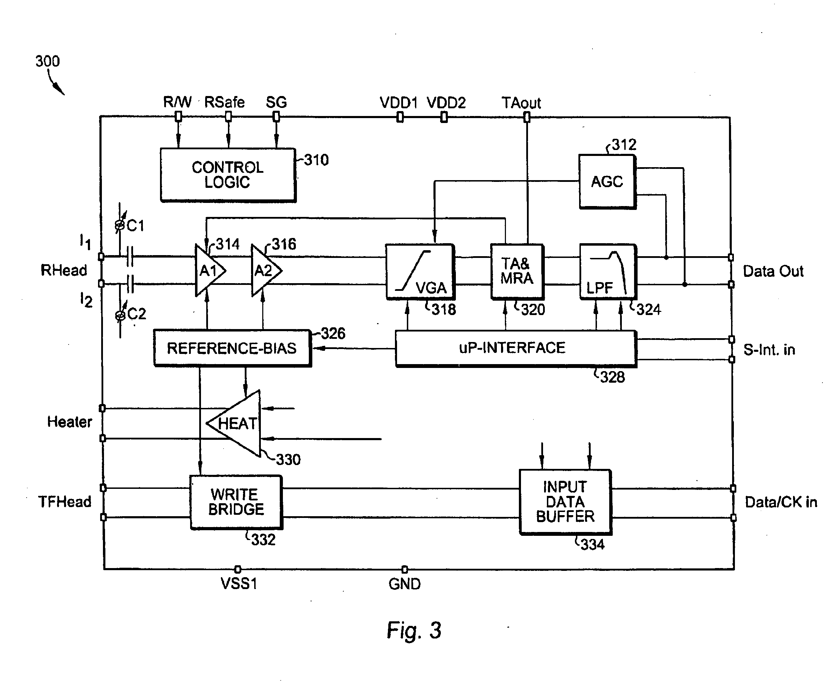

Figure 3. is an expanded view of the analog front end integrated circuit 300 showing some further detail regarding the pinout of the integrated circuit. In particular, the control logic block 310 is coupled to a read/write pin, an RSafe ("Read Safe") pin, which is used to enable reading without damage and an SG ("Servo Gate") pin. The preamplifier chain including amplifiers 314 and 316 is coupled to the read head pins RHead. Heater 330 is coupled to the Heater pins. The write bridge 332 is coupled to the TFHead pins, which refers to "Thin Film Head", although any type of head can be used in conjunction with the chip set of the present invention. Block 320 is coupled to the TAout (Thermal Asperity output) pins. The automatic gain control 312 and low pass filter 324 are coupled to the Data Out pins, and the microprocessor interface block is coupled to the S-Int ("Serial Input") input.pin. The input data buffer 334 is coupled to the data and clock input pins Data/CK in. Finally, pins are provided for power VDD1, VDD2, VSS1, and ground, GND.

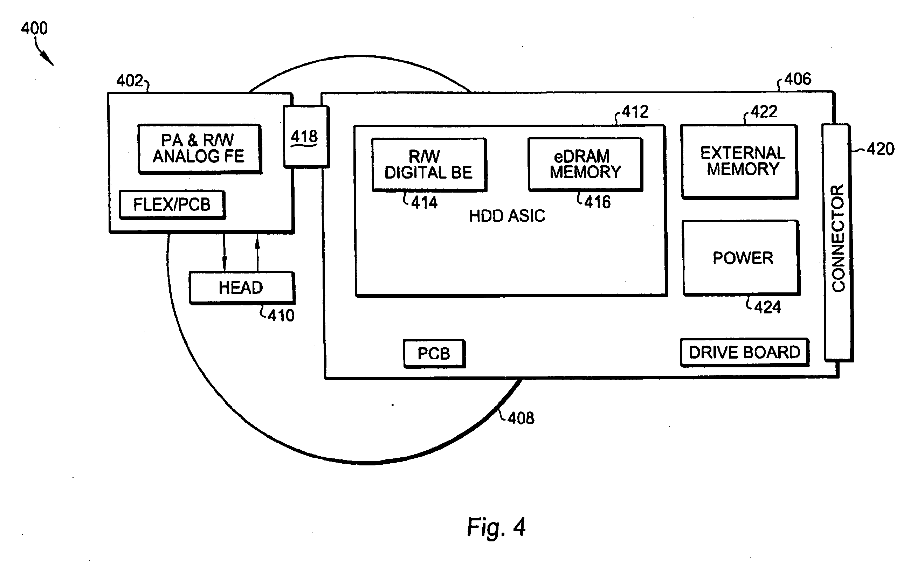

Figure 4 is a block diagram 400 of the entire hard disk drive chip set showing the locations of the analog 404 and digital 412 integrated circuits on two separate circuit boards 402 and 406. Figure 4 also shows the hard disk 408 and the head 410. The analog chip 404 is physically attached to flexible or other printed circuit board 402. The digital chip 412 is coupled to a second circuit board 406 that is physically coupled to.a hard drive. The analog chip 404 and the digital chip 412 are electrically coupled to each other with a multi-wire connector 418. The digital chip 412 is electrically coupled to a hard drive with a ribbon cable connector 420. The analog chip 404 is coupled to a head 410 of a hard drive. The digital chip 412 includes the read/write digital back end functions 414 previously described, as well as eDRAM memory 416 as previously described. The second printed circuit 406 containing the digital chip 412 also includes external memory 422 as well as a motor controller chip 424.

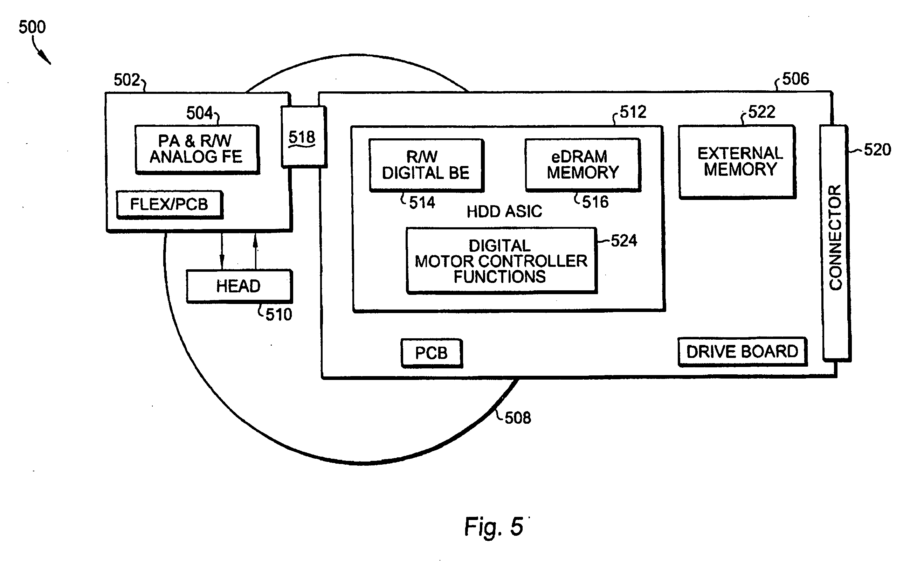

Figure 5 is a block diagram 500 of the entire hard disk drive chip set showing the locations of the analog 404 and digital 412 integrated circuits on two separate circuit boards 402 and 406. The difference between the chip set shown in FIG. 4 and the chip set shown in FIG. 5, is that in FIG. 5, the motor controller functions have been split into analog and digital functions and these functions have been absorbed into the analog chip 504 and digital chip 512, respectively. Figure 5 also shows the hard disk 508 and the head 510. The analog chip 504 is physically attached to flexible or other printed circuit board 502 as before. The digital chip 512 is coupled to a second circuit board 506 that is physically coupled to a hard drive as before. The analog chip 504 and the digital chip 512 are electrically coupled to each other with a multi-wire connector 518. The digital chip 512 is electrically coupled to a hard drive with a ribbon cable connector 520. The analog chip 504 is coupled to a head 510 of a hard drive. The analog chip 504 includes all of the functions previous described, as well as the analog functions provided ordinarily provided by a separate motor controller chip. The digital chip 512 includes the read/write digital back end functions 514 previously described, as well as eDRAM memory 516 as previously described, as well as the digital functions 524 previously provided by a separate motor controller chip. The second printed circuit 406 containing the digital chip 412 also includes external memory 422.

While an embodiment of the present invention has been shown and described, it will be apparent to those skilled in the art that there are many further changes that could be made if desired for a specific application. For example, the digital chip could or could not contain the analog-to-digital converters depending on board layout constraints and/or selected process technology features. The analog chip could embed a time base generator (PLL) as well as some of the servo control logic for different system implementations. The present invention is not limited by the final interface chosen, as this could be analog (i.e. Serial ATA) or digital (i.e. ATA) in nature. Typically, the HDD electronics reside on a Flex Board (Preamplifier) and a PCBA (SOC/Motor Controller/connector). In other implementations, depending on the sizes of components and size of the HDD electronics, all of the electronics could be assembled on a single board (Flex or PCBA) or a different partitioning could be used.

While there have been described above the principles of the present invention in conjunction with specific components, circuitry and bias techniques, it is to be clearly understood that the foregoing description is made only by way of example and not as a limitation to the scope of the invention. Particularly, it is recognized that the teachings of the foregoing disclosure will suggest other modifications to those persons skilled in the relevant art. Such modifications may involve other features which are already known per se and which may be used instead of or in addition to features already described herein. Although claims have been formulated in this application to particular combinations of features, it should be understood that the scope of the disclosure herein also includes any novel feature or any novel combination of features disclosed either explicitly or implicitly or any generalization or modification thereof which would be apparent to persons skilled in the relevant art, whether or not such relates to the same invention as presently claimed in any claim and whether or not it mitigates any or all of the same technical problems as confronted by the present invention. The applicants hereby reserve the right to formulate new claims to such features and/or combinations of such features during the prosecution of the present application or of any further application derived therefrom.

## Claims

1. A hard disk drive chip (200) set comprising:
a first chip (202) including substantially all of the analog functions for the hard disk drive except for a motor controller; and **characterised by**:
a second chip (204) including substantially all of the digital functions for the hard disk drive including an analog-to-digital converter (240) an output of which is coupled to a plurality of selectable read channels (248).

2. The hard disk drive.chip (200) set of claim 1 wherein the first chip (202) comprises read path amplification including a variable gain amplifier (218).

3. The hard disk drive chip (200) set of claim 1 or 2 wherein the first chip (202) comprises reference and bias circuitry (226).

4. The hard disk drive chip (200) set of claim 1, 2 or 3 wherein the first chip (202) comprises thermal asperity control and magneto resistivity asymmetry compensation circuitry (220).

5. The hard disk drive chip (200) set of any preceding claim wherein the second chip (204) comprises a servo processor circuit (256).

6. The hard disk drive chip (200) set of any preceding claim wherein the second chip (204) comprises a hard disk controller (264).

7. The hard disk drive chip (200) set of any preceding claim wherein each of the read channels (248) comprise an FIR filter (250), an ITR circuit(252), and a Viterbi detector (254).

8. A hard disk drive (200) comprising:
a first chip (202) including substantially all of the analog functions for the hard disk drive (200) except for a motor controller on a first circuit board (402) ; and **characterised by**:
a second chip (204) including substantially all of the digital functions for the hard disk drive including an analog-to-digital converter (240) an output of which is coupled to a plurality of read channels (248), an external memory (274), and a motor controller (264) on a second circuit board (406).

9. The hard disk drive of.claim 8 or the hard drive chip set (200) of any one of claims 1 to 8, wherein the first chip (202) is implemented in a BiCMOS process.

10. The hard disk drive of claim 8 or 9 or the hard drive chip set (200) of any one of claims 1 to 7 or 9 wherein the second chip (204) is implemented in a CMOS process.

11. The hard disk drive (200) of claim 8, 9 or 10 wherein the first chip (202) comprises a preamplifier (214).

12. The hard disk drive (200) of any of claims 8 to 11 wherein the first circuit board (402) comprises a flexible circuit board.

13. The hard disk drive (200) of any of claims 8 to 12 wherein the second circuit (406) board comprises a printed circuit board physically coupled to a hard drive.

14. The hard disk drive (200) of any of claims 8 to 13 wherein the first chip (202) and the second chip (204) are coupled to each other with a multi-wire connector.

15. The hard disk drive (200) of any of claims 8 to 14 wherein the second chip (204) is coupled to a hard drive with a ribbon cable.

16. The hard disk drive (200) of any of claims 8 to 15 wherein the first chip (202) is coupled to a head of a hard drive.

17. A hard disk drive chip (200) set comprising:
a first chip (202) including substantially all of the analog functions for the hard disk drive including analog motor controller functions; and
a second chip (204) including substantially all of the digital functions for the hard disk drive including an analog-to-digital converter (240) an output of which is coupled to a plurality of delectable read channels (248) and including digital motor controller functions.

## Patentansprüche

1. Chipsatz (200) für Festplattenantrieb, umfassend:
einen ersten Chip (202), der im Wesentlichen alle der analogen Funktionen für den Festplattenantrieb, außer für einen Motor-Controller einschließt; und **gekennzeichnet durch**:
einen zweiten Chip (204), der im Wesentlichen alle der digitalen Funktionen für den Festplattenantrieb einschließlich eines Analog-Digital-Wandlers (240) einschließt, wovon ein Ausgang an eine Vielheit von selektierbaren Lesekanälen (248) gekoppelt ist.

2. Chipsatz (200) für Festplattenantrieb nach Anspruch 1, wobei der erste Chip (202) eine Lesepfadverstärkung umfasst, die einen Verstärker (218) mit regelbarer Verstärkung einschließt.

3. Chipsatz (200) für Festplattenantrieb nach Anspruch 1 oder 2, wobei der erste Chip (202) Referenz-und Bias-Schaltung (226) umfasst.

4. Chipsatz (200) für Festplattenantrieb nach Anspruch 1, 2 oder 3, wobei der erste Chip (202) Korrekturschaltung (220) für thermische Unebenheitssteuerung und Magnetowiderstandsasymmetrie umfasst.

5. Chipsatz (200) für Festplattenantrieb nach einem beliebigen vorangehenden Anspruch, wobei der zweite Chip (204) eine Servo-Prozessorschaltung (256) umfasst.

6. Chipsatz (200) für Festplattenantrieb nach einem beliebigen vorangehenden Anspruch, wobei der zweite Chip (204) einen Festplatten-Controller (264) umfasst.

7. Chipsatz (200) für Festplattenantrieb nach einem beliebigen vorangehenden Anspruch, wobei jeder der Lesekanäle (248) einen FIR-Filter (250), einen ITR-Schaltkreis (252) und einen Viterbi-Detektor (254) umfasst.

8. Festplattenantrieb (200), umfassend:
einen ersten Chip (202), der im Wesentlichen alle der analogen Funktionen für den Festplattenantrieb (200) außer für einen Motor-Controller auf einer ersten Leiterplatte (402) einschließt; und
**characterised by**:
einen zweiten Chip (204), der im Wesentlichen alle der digitalen Funktionen für den Festplattenantrieb einschließlich eines Analog-Digital-Wandlers (240) einschließt, wovon ein Ausgang an eine Vielheit von Lesekanälen (248), einen externen Speicher (274) und einen Motor-Controller (264) auf einer zweiten Leiterplatte (406) gekoppelt ist.

9. Festplattenantrieb nach Anspruch 8 oder dem Chipsatz (200) für den Festplattenantrieb eines beliebigen der Ansprüche 1 bis 8, wobei der erste Chip (202) in einem BICMOS-Prozess implementiert ist.

10. Festplattenantrieb nach Anspruch 8 oder 9 oder dem Chipsatz (200) für den Festplattenantrieb eines beliebigen der Ansprüche 1 bis 7 oder 9, wobei der zweite Chip (204) in einem CMOS-Prozess implementiert ist.

11. Festplattenantrieb (200) nach Anspruch 8, 9 oder 10, wobei der erste Chip (202) einen Vorverstärker (214) umfasst.

12. Festplattenantrieb (200) nach einem beliebigen der Ansprüche 8 bis 11, wobei die erste Leiterplatte (402) eine flexible Leiterplatte umfasst.

13. Festplattenantrieb (200) nach einem beliebigen der Ansprüche 8 bis 12, wobei die zweite Leiterplatte (406) eine gedruckte Leiterplatte umfasst, die körperlich an einen Festplattenantrieb gekoppelt ist.

14. Festplattenantrieb (200) nach einem beliebigen der Ansprüche 8 bis 13, wobei der erste Chip (202) und der zweite Chip (204) mittels eines Mehrdrahtverbinders aneinander gekoppelt sind.

15. Festplattenantrieb (200) nach einem beliebigen der Ansprüche 8 bis 14, wobei der zweite Chip (204) mittels eines Flachbandkabels an einen Festplattenantrieb gekoppelt ist.

16. Festplattenantrieb (200) nach einem beliebigen der Ansprüche 8 bis 15, wobei der erste Chip (202) an einen Kopf eines Festplattenantriebs gekoppelt ist.

17. Chipsatz (200) für Festplattenantrieb, umfassend:
einen ersten Chip (202), der im Wesentlichen alle der analogen Funktionen für den Festplattenantrieb einschließlich analoger Motor-Controller-Funktionen einschließt; und
einen zweiten Chip (204), der im Wesentlichen alle der digitalen Funktionen für den Festplattenantrieb einschließlich eines Analog-Digital-Wandlers (240) einschließt, wovon ein Ausgang an eine Vielheit von selektierbaren Lesekanälen (248) gekoppelt ist, der digitale Motor-Controller-Funktionen einschließen.

## Revendications

1. Ensemble de puces de lecteur de disque dur (200) comportant :
une première puce (202) comprenant sensiblement toutes les fonctions analogiques pour le lecteur de disque dur sauf pour un contrôleur de moteur ; et **caractérisé par** :
une seconde puce (204) comprenant sensiblement toutes les fonctions numériques pour le lecteur de disque dur comprenant un convertisseur analogique-numérique (240) dont une sortie est couplée à une pluralité de canaux de lecture en mesure d'être sélectionnés (248).

2. Ensemble de puces de lecteur de disque dur (200) selon la revendication 1, dans lequel la première puce (202) comporte une amplification des chemins de lecture comprenant un amplificateur à gain variable (218).

3. Ensemble de puces de lecteur de disque dur (200) selon la revendication 1 ou la revendication 2, dans lequel la première puce (202) comporte des circuits de référence et de polarisation (226).

4. Ensemble de puces de lecteur de disque dur (200) selon l'une quelconque des revendications 1, 2 ou 3, dans lequel la première puce (202) comporte des circuits de contrôle des aspérités thermiques et de compensation d'asymétrie de résistance magnétique (220).

5. Ensemble de puces de lecteur de disque dur (200) selon l'une quelconque des revendications précédentes, dans lequel la seconde puce (204) comporte un circuit processeur de servocommande (256).

6. Ensemble de puces de lecteur de disque dur (200) selon l'une quelconque des revendications précédentes, dans lequel la seconde puce (204) comporte un contrôleur de disque dur (264).

7. Ensemble de puces de lecteur de disque dur (200) selon l'une quelconque des revendications précédentes, dans lequel chacun des canaux de lecture (248) comporte un filtre à réponse impulsionnelle finie (250), un circuit de récupération du rythme par interpolation (252), et un détecteur de Viterbi (254).

8. Lecteur de disque dur (200) comportant :
une première puce (202) comprenant sensiblement toutes les fonctions analogiques pour le lecteur de disque dur (200) sauf pour un contrôleur de moteur sur une première carte de circuit imprimé (402) ; et **caractérisé par** :
une seconde puce (204) comprenant sensiblement toutes les fonctions numériques pour le lecteur de disque dur comprenant un convertisseur analogique-numérique (240) dont une sortie est couplée à une pluralité de canaux de lecture (248), une mémoire externe (274), et un contrôleur de moteur (264) sur une seconde carte de circuit imprimé (406).

9. Lecteur de disque dur selon la revendication 8 ou ensemble de puces de lecteur de disque dur (200) selon l'une quelconque des revendications 1 à 8, dans lesquels la première puce (202) est implantée dans un procédé BICMOS.

10. Lecteur de disque dur selon la revendication 8 ou la revendication 9 ou ensemble de puces de lecteur de disque dur (200) selon l'une quelconque des revendications 1 à 7 ou 9, dans lesquels la seconde puce (204) est implantée dans un procédé CMOS.

11. Lecteur de disque dur (200) selon l'une quelconque des revendications 8, 9 ou 10, dans lequel la première puce (202) comporte un préamplificateur (214).

12. Lecteur de disque dur (200) selon l'une quelconque des revendications 8 à 11, dans lequel la première carte de circuit imprimé (402) comporte une carte de circuit imprimé souple.

13. Lecteur de disque dur (200) selon l'une quelconque des revendications 8 à 12, dans lequel la seconde carte de circuit imprimé (406) comporte une carte de circuit imprimé couplée physiquement à un lecteur de disque dur.

14. Lecteur de disque dur (200) selon l'une quelconque des revendications 8 à 13, dans lequel la première puce (202) et la seconde puce (204) sont couplées l'une par rapport à l'autre par le biais d'un connecteur à fils multiples.

15. Lecteur de disque dur (200) selon l'une quelconque des revendications 8 à 14, dans lequel la seconde puce (204) est couplée à un lecteur de disque dur par le biais d'un câble plat.

16. Lecteur de disque dur (200) selon l'une quelconque des revendications 8 à 15, dans lequel la première puce (202) est couplée à une tête d'un lecteur de disque dur.

17. Ensemble de puces de lecteur de disque dur (200), comportant :
une première puce (202) comprenant sensiblement toutes les fonctions analogiques pour le lecteur de disque dur comprenant des fonctions analogiques de contrôleur de moteur ; et
une seconde puce (204) comprenant sensiblement toutes les fonctions numériques pour le lecteur de disque dur comprenant un convertisseur analogique-numérique (240) dont une sortie est couplée à une pluralité de canaux de lecture en mesure d'être sélectionnés (248) et comprenant des fonctions numériques de contrôleur de moteur.
